# EUROPEAN PATENT APPLICATION

(11) **EP 1 594 027 A2**
(43) Date of publication of application: **09.11.2005**
(21) Application number: 04029832.5
(22) Date of filing: 16.12.2004
(51) Int. Cl.: G06F 1/00

(54) **Apparatus and method for preventing data copy by cardbus devices**

(30) Priority: 03.05.2004 KR 2004031165
(71) Applicant: LG ELECTRONICS INC., Seoul (KR)
(72) Inventor: Kim, Jae Myeon, Pyeongtak-si Gyeonngi-do (KR)
(74) Representative: Vossius & Partner

(57) **Abstract**

Embodiments of an apparatus and a method can discourage or prevent unauthorized data copy by cardbus (e.g., PCMCIA) devices. Embodiments of the apparatus and method can determine whether to enable/disable cardbus use when booting or setting up a system, by adding a function of setting the cardbus Enable/Disable in a system BIOS to prevent data from being flowed out through the cardbus devices without the consent of the system user. Further, embodiments can set the cardbus Enable/Disable by inputting a predetermined specific key during system runtime.

## Description

The present invention relates to an apparatus and a method for controlling data copy.

In a desktop computer, a notebook computer, a tablet computer, a convertible computer and various portable systems, cardbus devices are used for expanding additional functions to the functions respectively provided by the systems. In the portable systems, a card expansion slot is provided to expand various functions in a docketing system, while maintaining a small-sized and lightly constituted body to satisfy the simplicity, portableness, and light weight of the portable systems.

The cardbus is a card for expansion, for example, a PC card. Further, the card devices include a cardbus, a card slot and a cardbus controller.

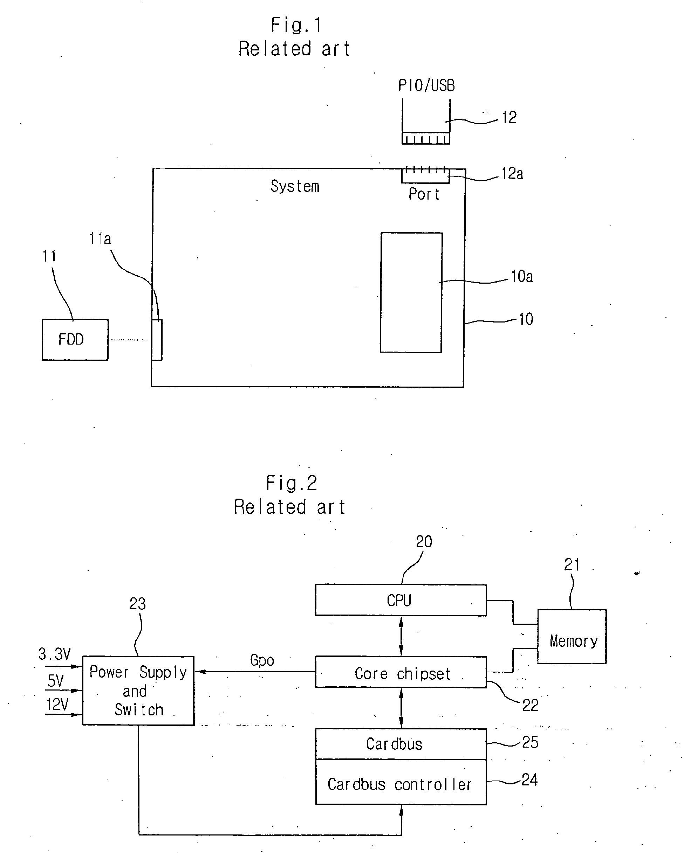

Fig. 1 is a block diagram of a related art system configured to attach and remove an auxiliary memory including an IC memory card. As shown in Fig. 1, a system 10 has an insertion side 11a and a port 12a formed at one side of the system, a FDD 11 is an external medium to be inserted in the insertion side 11a and an input port 12 to be inserted in the port 12a. The system 10 also has a Hot key or an additional key 10a. In the related art apparatus of Fig. 1, a data process is performed by inserting an IC card in the port 12a.

Fig. 2 is a block diagram of a general notebook computer. As shown in Fig. 2, the notebook computer includes a central processing unit 20 for controlling a system, a core chipset 22 for transmitting data to the peripheral and charging in a control function, a memory 21 for connecting with the CPU 20 and the core chipset 22, and a cardbus controller 24 for controlling the system and data input/output using a cardbus 25. A power supply/switch portion 23 performs a power supply/switching.

In the apparatus of Fig. 2, in order to prevent the cardbus use, the power supply/switch portion 23 is turned off by outputting a GPO (General Purpose Output) in the chipset 22 by a user's control.

However, the conventional system generally always maintains the state of supplying the power to the cardbus controller 24, therefore, everyone can use or access a cardbus controlled by the cardbus controller.

For example, it is possible for a random user or an illegal user to insert a random cardbus into the cardbus slot by changing the cardbus 25, without the consent of a system user: At that time, the cardbus controller 24 performs a data copy responsive to a third party user's control with respect to the cardbus, which is controllable by the cardbus controller 24.

As described above, the conventional cardbus devices and portable computers have various disadvantages. For example, in the conventional system, it is possible for a third person to copy the data in the system at his/her option, without the system user's consent, by using his/her cardbus, and thus, an important data can be exported, accessed or copied.

The above references are incorporated by reference herein where appropriate for appropriate teachings of additional or alternative details, features and/or technical background.

An object of the invention is to solve at least the above problems and/or disadvantages or to provide at least the advantages described hereinafter.

Another object of the present invention is to provide an apparatus and a method for preventing data in the system from unauthorized copying by using a cardbus.

Another object of the present invention is to provide an apparatus and a method for preventing data from being illegally copied by a cardbus, by setting cardbus enable/disable in a system BIOS.

Another object of the present invention is to provide an apparatus and a method for preventing a third person from flowing out data by cardbus devices supported in notebook computers, desktop computers, tablet computers and various portable systems, without the consent of a system user, at his/her option.

In order to achieve at least the above objects and advantages in a whole or in part, in accordance with one aspect of the present invention there is provided a method for preventing data copy by cardbus devices that includes preparing an item for storing a setup value on whether to use a cardbus controller in a system setup menu, and controlling the setup value, updating the setup value on whether to use the cardbus controller during system runtime using a predetermined key and verifying a user when changing the setup value on whether to use the cardbus controller in the update step.

To further achieve at least the above objects and advantages in a whole or in part, in accordance with one aspect of the present invention there is provided a method for controlling data copy by cardbus devices in a computer system that includes receiving a predetermined input to select a cardbus device authorization operation during system operations, setting a selected item value corresponding to a selected enabled or disabled status of a cardbus controller device and updating the status of the cardbus controller device according to the item value.

To further achieve at least the above objects and advantages in a whole or in part, in accordance with one aspect of the present invention there is provided a method for controlling data copy by cardbus devices that includes designating an item configured to control whether to authorize use of a cardbus device and updating the item to selectively enable or disable use of the cardbus device during system runtime.

To further achieve at least the above objects and advantages in a whole or in part, in accordance with one aspect of the present invention there is provided an apparatus that includes unit for designating an item configured to control whether to authorize use of a cardbus device and unit for updating the item to selectively enable or disable use of the cardbus device during system runtime.

Additional advantages, objects, and features of the invention will be set forth in part in the description which follows and in part will become apparent..to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:

Fig. 1 is a block diagram showing a conventional system configured to attach and remove an auxiliary memory including an IN memory card;

Fig. 2 is a block diagram of a general notebook computer;

Fig. 3 is a block diagram showing cardbus devices and components configured in a portable system including a computer according to a preferred embodiment of the present invention;

Fig. 4 is a flow chart illustrating a preferred embodiment of a method of using cardbus devices according to the present invention;

Fig. 5 is a flow chart illustrating a preferred embodiment of a method of controlling cardbus devices performed by a system BIOS;

Fig. 6 is a flow chart illustrating a preferred embodiment of a method of controlling cardbus devices setup from Enable to Disable in order to change whether to use the cardbus devices by inputting a hot key as a predetermined specific key during a system run-time;

Fig. 7 is a flow chart illustrating a preferred embodiment of a method of controlling cardbus devices setup from Disable to Enable in order to change whether to use the cardbus devices by inputting a hot key as a predetermined specific key during a system run-time;

Fig. 8 is a flow chart illustrating a preferred embodiment of a method where the operation conditions of cardbus devices are changed to Disable/Enable, respectively, in case of Enable/Disable during a system run-time; and

Fig. 9 is a general flow chart illustrating a preferred embodiment of a method where cardbus devices are setup as Enable/Disable during a system run-time.

### DETAILED DESCRIPTION OF PREFERRED EMBODIMENTS

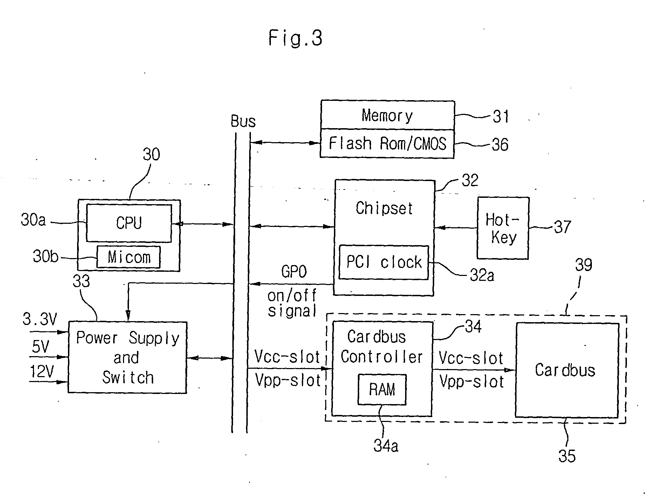

Fig. 3 is a block diagram showing cardbus devices and main components in a portable system including a computer according to an embodiment of the present invention. As shown in Fig. 3, a computer can include a control unit 30 including a CPU 30a and a microprocessor (micom) 30b; a core chipset 32 can include a PCI clock unit 32a for oscillating a PCI clock, outputting a signal (e.g., SCI or SMI) to control a system when a hot key 37 (e.g., a predetermined specific key) is input and in charge of transmitting and controlling functions of data to peripherals; and a memory 31 (e.g., RAM) can be coupled with the CPU 30a and the chipset 32 though a bus. A BIOS ROM 36 can include basic routines to set prevention of copy by a cardbus, and a cardbus device 39 can include a cardbus controller 34 with a RAM 34a in which values of a register can be modified and stored to change and setup a PC system and data input/output Enable/Disable using the cardbus 35. A power supply/switch unit 33 can perform the power supply and power switching of the cardbus device 39 according to the output of the chipset (e.g., GPO).

In accordance with embodiments of the present invention to prevent a cardbus use: 1) the BIOS ROM 36 can store or perform a corresponding routine for setting the data copy enable/disable during a system booting or a setup; or 2) the data copy enable/disable can be determined as the BIOS routine is performed by a control signal of the chipset 32 by inputting a predetermined specific key, for example, hot key 37, during system runtime, and can be operated by an operating system (OS) by changing a RAM 34a register value. However, the present invention is not intended to be so limited.

The apparatus of Fig. 3 can reduce or prevent unauthorized cardbus use as described above. In the apparatus of Fig. 3, the BIOS ROM 36 can be a memory readable and writable that enables information to be kept even though the power is off, and a flash memory which stores a program and data required for a basic operation to be used, with various routines required whenever a computer is turned on.

The flash memory can be coupled to and stores the BIOS (Basic Input/Output System) as a kind of program to administrate an information transmission among the peripheral systems such as memory, disk, monitor, each conditional state for a power management mode setup and accordingly an optimum power management mode and the like.

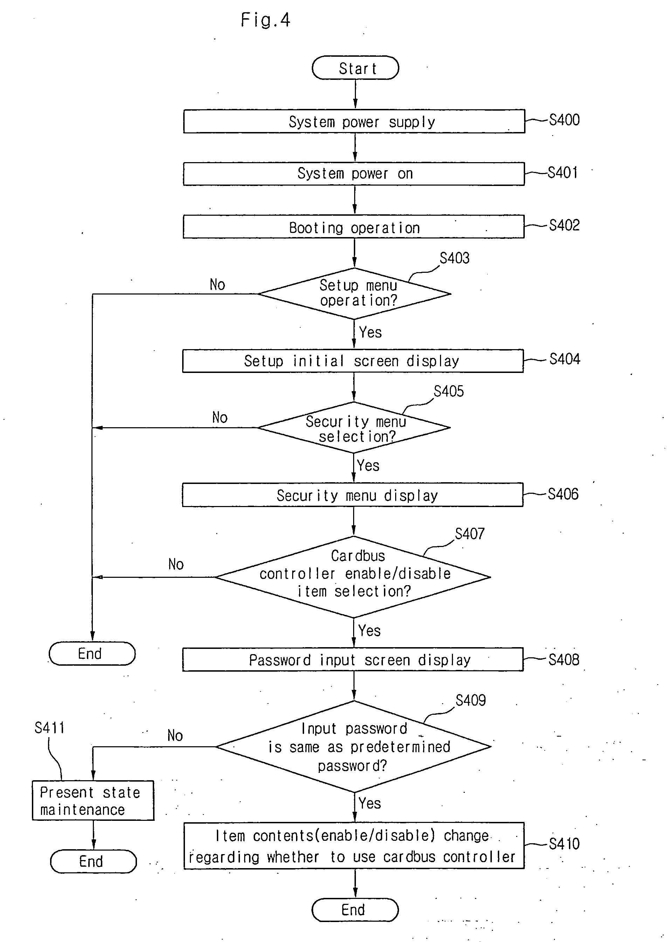

Fig. 4 is a flow chart illustrating an embodiment of a method for a setup including whether to use cardbus devices and an operation of using the cardbus devices according to the present invention. The embodiment of Fig. 4 will be described using and can be applied to the apparatus of Fig. 3. However, the present invention is not intended to be so limited.

As shown in Fig. 4, in order to perform data input/output by using a cardbus, it is first necessary for a user to set whether cardbus devices can be operated (e.g., enable/disable). For example, in a power-on state that a system is operable, the user can select whether to use the cardbus devices through a routine as set in a BIOS. For this purpose, the BIOS menu can be provided with a menu item to select whether to use the cardbus devices.

The menu item to select whether to use the cardbus devices in the BIOS setup menu can be set by a system manufacture. Thus, the menu item is preferably included in the as-built system.

It is preferable to set security (for example, to set a password) in order for only the user to control the menu for selecting whether to use the cardbus devices (e.g., Enable/Disable). Alternatively, security can be necessarily provided only for the cardbus device menu item.

As shown in Fig. 4, in the state that the power is supplied in the system, if the user turns on the power of the system, the operation as set in the BIOS is orderly worked (block S400, S401). Then, a system booting operation is performed. (block S402)

During the booting operation (e.g., in the boot menu), a setup menu selection operation can be performed by the routine as set in the BIOS or the user. (block S403) The setup menu operation can be recognized in the core chipset 32 through the control unit 30.

For example, the core chipset 32 can display a setup menu screen or the like as stored in the memory 36 in a display device (not shown). (block S404) The user can select a security menu of the setup contents accessed through the setup menu selection as displayed in the display device (block S405), and the contents of the security menu as selected can be displayed on the display device. (block S406)

The user can then select an item (e.g., Enable/Disable) for selecting whether to use the cardbus devices 39 in the security menu contents as displayed in the display device. (block S407) If the user selects the item for selecting whether to use the cardbus controller (block S407), the system BIOS can display a screen or the like for a password input. (block S408)

For example, so that only the user can change the item for selecting whether to use the cardbus devices (e.g., Enable/Disable), a password can be set in the item for selecting whether to use the cardbus devices. However, the present invention is not intended to be so limited.

When changing the item for selecting whether to use the cardbus devices, a verification of the password can be performed. Therefore, it is desirable for the user to set the password for the item for selecting whether to use the cardbus devices before using the system. Specifically, this can be a matter required for changing the state of using the cardbus devices from Disable to Enable.

If the password input screen is displayed (block S408), and if the identical password with that as preset is input (block S409), it is possible to change the item (e.g., to Enable) for selecting whether to use the cardbus devices. (block S410)

However, if the password as input is not identical with that as preset, the state of using the cardbus devices can be kept as it was before. (block S411) For example, in a first use of the system, the use of the cardbus devices can be kept Disable.

On the other hand, if whether to use the cardbus devices is changed from Disable to Enable, the password as set for security can be required to prevent use of an unauthorized third person and only if the password is identical, the change is performed.

As shown in Fig. 4, whether to use the cardbus devices is preferably set during system setup. Thus, the cardbus device access can be set in the process of booting or setting up an initial BIOS ROM, and whether to use the cardbus of the system can be controlled by the conditions as described above.

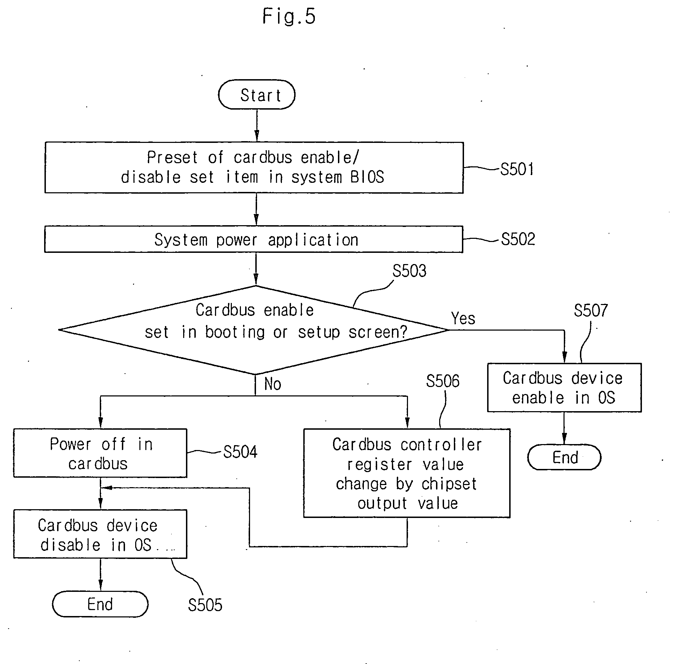

Fig. 5 is a flow chart illustrating an embodiment of a method for controlling cardbus devices performed using a system BIOS. The embodiment of a method will be described using and can be applied to the apparatus of Fig. 3. However, the present invention is not intended to be so limited.

As shown in Fig. 5, after a process starts, an item for setting a cardbus as Enable/Disable in the system BIOS is preferably preset. (block S501) A power can be applied and the system can be booted. (block S502)

On the system booting or setup screen, if a user sets whether to use the cardbus as Enable (block S503), an OS (Operating System) can enable the cardbus devices to be used. (block S507)

On the system booting or setup screen, if the user sets whether to use the cardbus as Disable, the system can be operated not to use the cardbus devices. For example, in a hardware mode, a power supply/switching unit 33 can turn off the power to be applied to the cardbus devices 39 according to the control of the control unit 30 and the signal as output in the chipset 32. (block S504) Alternatively, in a software mode, the Enable/Disable value of the cardbus can be set in a register (RAM) 34a of the cardbus controller 34 that can be changed to the Disable/Enable value according to the control of the control unit 30 and the signal as output in the chipset 32. (block S506) However, the present invention is not intended to be so limited.

From blocks S506 or S505, the cardbus devices can operate in the OS (Operating System) according to the set cardbus devices Enable/Disable status. (block S505) From blocks S505 and S507, the process can be completed.

As shown in Fig. 5, during the booting or setup by the system BIOS, the hardware control or software control in setting the cardbus devices operation state as Disable will now be described in additional detail.

If the user sets the cardbus devices as Disable, the system control unit for performing an operation in accordance with the BIOS setup contents can recognize that the cardbus device(s) is not used and can transmit the information to the core chipset 32 accordingly. The core chipset 32 can output a GPO signal to turn off the power of 3.3 voltage to be applied as the power source of the cardbus controller 34 by the power supply/switching unit 33.

In the software mode, the register value 34a of the cardbus controller can be changed by the value of a PCI clock 32a as output in the chipset 32 to change the cardbus controller in the Disable state.

If the user sets the cardbus devices as Enable, the following exemplary control can be made in the system control unit for performing an operation according to the BIOS setup contents. The user can select the cardbus controller Disable state as set in the BIOS setup menu to be the Enable state.

In order to prevent the others (e.g., unauthorized others) from changing the contents regarding whether to use the cardbus controller, the user can perform a verification process. For example, verification of password can be performed, and then the contents can change.

That is, if the user sets the cardbus devices as Enable, the system control unit for performing the operation according to the BIOS setup contents can recognize that the cardbus devices are used and can accordingly transmit the relevant information to the core chipset 32. The core chipset can output a GPO signal to apply the power of 3.3 voltage as the power source for use of the cardbus controller 34 by the power supply/switching unit 33.

In the software mode, the register value 34a of the cardbus can be changed by the value of a PCI clock 32a as output in the chipset 32 to change the cardbus controller to the Enable state. As described above, in embodiments according to the present invention, one aspect can be characterized in that only the user can change the register value to indicate whether the power as supplied to the cardbus controller is closed or opened or whether the cardbus controller is operated.

For this purpose, the BIOS setup menu item in one embodiment can be provided with the item for selecting whether to use the cardbus controller (e.g., Enable/Disable); and the item for selecting whether to use the cardbus controller can be controlled to be updated by a verification process such as verifying the password.

Another exemplary Enable/Disable setup of the cardbus devices through the software control will now be described.

In this example, it is possible to obtain the same effects as described above, by changing and controlling the register setting value of the current cardbus controller (e.g., clock source bit value). However, the present invention is not intended to be so limited.

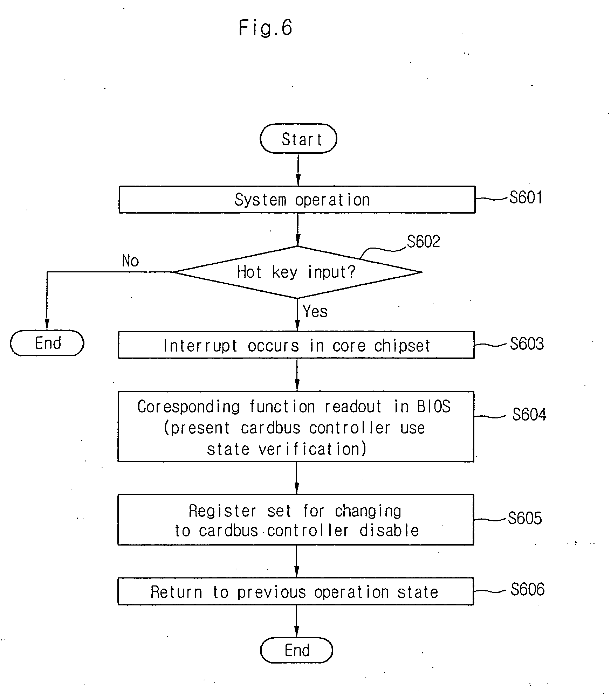

Fig. 6 is a flow chart illustrating an embodiment of a method where use of cardbus devices is setup from Enable to Disable in order to change whether to use the cardbus devices by inputting a predetermined specific key (e.g., hot key) during system run-time. The embodiment of a method will be described using and can be applied to the apparatus of Fig. 3. However, the present invention is not intended to be so limited.

In case where a system user is executing the system, the user needs to control the operation of his/her system cardbus controller during the execution. In such a case, changing the setup menu by the system BIOS can cause inconvenience on use of the system to the user.

Thus, it is desirable or necessary to control the use state of the cardbus controller to be changed during the system use. For example, the use state of the cardbus controller by a key operation.

As described below, it is possible to control the power off in the hardware mode by a hot key input. However, it is not necessary to turn off the power because of the temporary stop of the cardbus devices. Further, it is preferable to control the change of the use state of the cardbus controller by the software control (e.g., the change of the clock source bit value) since the reverse electric current by the power-off in the hardware mode can negatively affect the system.

The user can set a random hot key 37 as a button to set whether to use the cardbus controller. It is desirable to set the hot key by combining two or more keys.

As shown in Fig. 6, when the system is in the operation state (block S601), there are times when the system user leaves his/her seat for some time. At that time, if the user desires to control the cardbus controller to the Disable state in his/her computer, the user can operate the prescribed hot key for the use state conversion of the cardbus controller. (block S602)

Alternatively, a timer function can be enabled. In one exemplary case, should user input not be received for a prescribed time period, a routine is initiated by the system to change the use status of the cardbus device to disable.

A control signal corresponding to the operated prescribed hot key can be recognized in the control unit 30 and then transferred to the chipset 32. The chipset 32 can generate a SCI (System Control Interrupt) or a SMI (System Management Interrupt) or the like for the use state conversion of the cardbus controller. (block S603)

If the interrupt is generated, the system BIOS and BIOS driver or OS driver can be operated to read the value of the register 34a and to verify the operation state of the current cardbus controller. (block S604) However, the present invention is not intended to be so limited.

The chipset 32 can change the value of the register defining the use state of the cardbus controller and set the Disable state. (block S605) In addition, a user verification or security password can be added to the process of block S605.

An exemplary operation that can be performed in block S605 will now be described. One or more clock sources in the system are available in changing the value of the register 34a of the cardbus controller. For example, there are included a clock provided externally by a crystal generator, or a clock to set the cardbus devices as Disable when booting or setting up the system BIOS, or a clock by the hot key input, for example, a clock generated by the PCI clock and driven by the chipset.

Therefore, in the system wherein the Enable of the usability of the cardbus devices is designed as a first prescribed status (e.g., "0") when the system is operating, the register value of the clock driven by the chipset of Enable is set as "0" and the register value of PCI clock Disable is set as "1".

However, in case of the system designed as the first prescribed status being "1", the register value of the clock driven by the chipset of Enable is set as "1" and the register value PCI clock of Disable is set as "0". However, the present invention is not intended to be so limited.

After converting the use state of the cardbus devices, the interrupt for the use state conversion can be terminated and returned to the previous operation. Thus, in the embodiment of Fig. 6, the system is not re-booted.

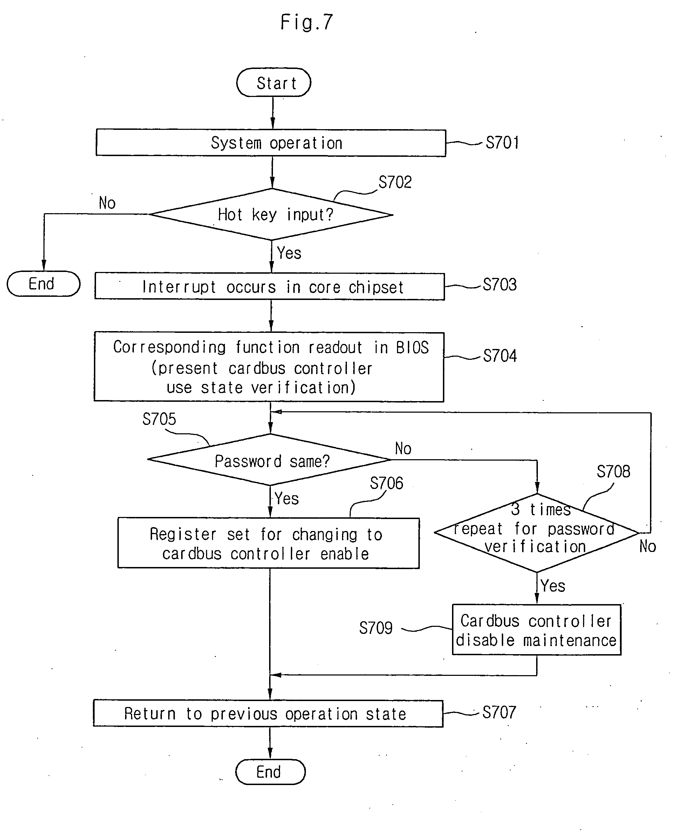

Fig. 7 is a flow chart illustrating an embodiment of a method where use of cardbus devices is setup from Disable to Enable in order to change whether to use the. cardbus devices by inputting a hot key as a predetermined specific key during system run-time. The embodiment of a method will be described using and can be applied to the apparatus of Fig. 3. However, the present invention is not intended to be so limited.

As shown in Fig. 7, basic operations can be similar to Fig. 6, however, a process for authenticating a system user is preferably added. For example, a process of verifying a password to identify whether a person who inputs a command (e.g., to enable cardbus devices) is a system user can be added.

After a process starts as shown in Fig. 7, when the system is in the operation state (block S701), there are times when the system user leaves his/her seat for some time. At that time, if the user desires to control the cardbus controller as the Disable state in his/her computer, the user can input the hot key as corresponding to the use state conversion of the cardbus controller. (block S702)

A control signal corresponding to the hot key as input can be recognized in the control unit 30 and then transferred to the chipset 32. The chipset 32 can generate a SCI or a SMI for the use state conversion of the cardbus controller. (block S703)

If the interrupt (e.g., SCI or SMI) is generated, the system BIOS can be operated to read the value of the register 34a and to verify the operation state of the current cardbus controller. (block S704) When the current operation state of the cardbus controller is determined to be Disable (block S704) at present, the hot key as input is a signal input to convert the operation state of the cardbus controller to Enable.

At this time, in the control unit and BIOS, it is preferably necessary to verify whether the hot key is input by the system user or an illegal user. A process for verifying the password can be performed in the BIOS routine. (block S705)

As a result of the verification (block S705), if the password is the same, the register value is changed to change the cardbus controller to Enable. (block S706). Then, the system can be returned to the previous system operation state prior to the generation of the interrupt. (block S707)

Otherwise, if the password is not the same as a result of the verification (block S705), re-inputting and re-verifying the password can be repeatedly performed for a predetermined number of times, for example, three times. (block S708)

If the password is still wrong more than the predetermined number of times, the cardbus controller can be kept as Disable (block S709) and returned to the previous system operation state prior to the generation of the interrupt. (block S707)

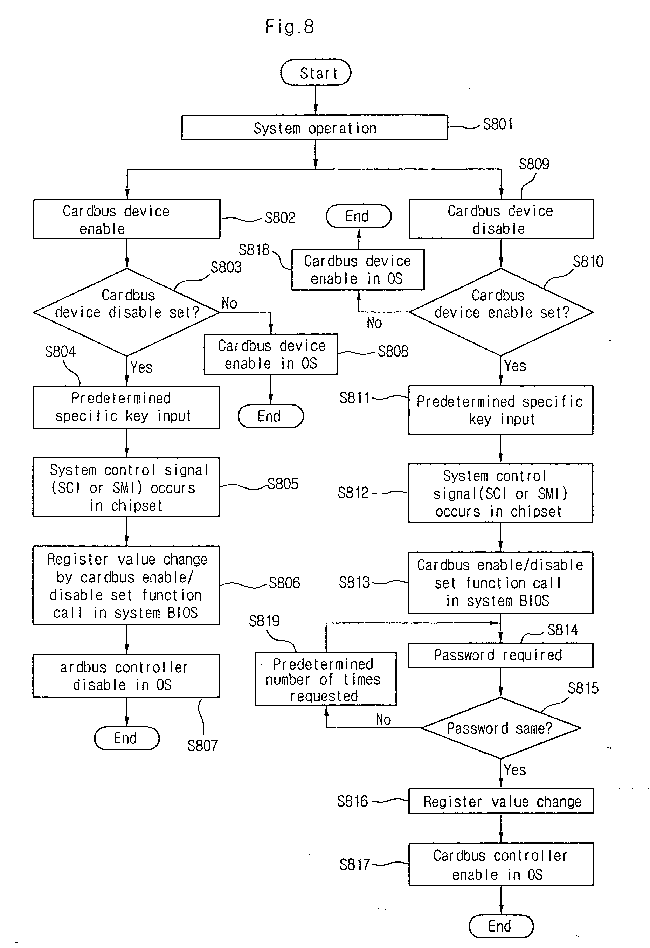

Fig. 8 is a flow chart illustrating an embodiment of a method where the operation conditions of cardbus devices are changed to Disable/Enable, respectively, in case of Enable/Disable during system run-time. The embodiment of a method will be described using and can be applied to the apparatus of Fig. 3. However, the present invention is not intended to be so limited.

As shown in Fig. 8, after a process starts, the system can be enabled and be performing normal operation. At this time, the use state of the cardbus devices can be enable/disable. (block S801)

First, a process will be described when the use state of the cardbus devices is enable. (block S802) If a user desires to set the cardbus devices as Disable, the user inputs a predetermined specific key. (blocks S803, S804)

If the user does not set the cardbus devices as Disable, the operation system (OS) can control the cardbus devices to remain continuously used. (S808)

When the specific key 37 is input by the user, the control unit 30 or the chipset 32 can generate the system control signal (e.g., SCI/SMI) (block S805), and the system BIOS can call the cardbus enable/disable setup function to set the function as Disable and change the register value of the cardbus controller as Disable. (block S806) Accordingly, the cardbus controller can be returned to the OS being in the disable state. (block S807)

A process will now be described when the use state of the cardbus devices is disable. (block S809) If the user desires to set the cardbus devices as Enable, the user inputs a predetermined specific key. (blocks S810, S811)

If the user does not set the cardbus devices as Enable, the operation system (OS) can control the cardbus devices to remain not used. (block S818)

When the specific key 37 is input by the user, the control unit 30, the chipset 32 or the like can generate the system control signal (e.g., SCI/SMI) (block S812). Then, the system BIOS can call the cardbus enable/disable setup function. (block S813)

The BIOS routine can require the password of the user and repeatedly verify whether the password is identical with a predetermined password up to a predetermined number of times. (blocks S814, S815, S819) However, there is no problem even if the number of times for requiring the password is not predetermined or not limited.

If the password is the same, the register value of the cardbus controller can be changed. (block S816) Accordingly, the cardbus controller is returned to the OS being in the enabled state. (block S817)

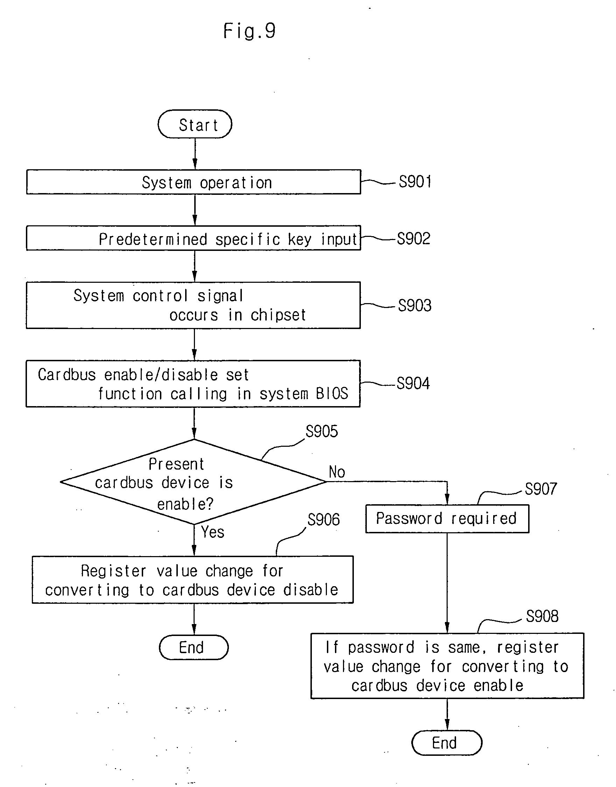

Fig. 9 is a flow chart illustrating an embodiment of a method where cardbus devices are setup as Enable/Disable during system run-time. The embodiment of a method will be described using and can be applied to the apparatus of Fig. 3. However, the present invention is not intended to be so limited.

As shown in Fig. 9, during the system runtime, if a user desires to change the operation state of the cardbus devices, the user can input a predetermined specific key or a pop-up window. (blocks S901, S902) The chipset can generate the system control signal, and the system BIOS can call the cardbus enable/disable setup routine accordingly. (blocks S903, S904).

If the current cardbus use state as set is Enable, the BIOS and register value can be set as Disable by the operation of the predetermined specific key. (block S906)

If the current cardbus use state as set is Disable; the password is preferably required when the predetermined specific key is input by the user. (block S907) Accordingly, if the password is the same, the BIOS and register value are set as Enable. (block S908)

Thus, according to the embodiment of Fig. 9, a status or state of the cardbus device or cardbus use state is preferably updated. Further, the enabled status' or state can be limited by a timer (e.g., 10 minutes) or time-out (e.g., idle) function.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. Furthermore, for ease of understanding, certain method procedures may have been delineated as separate procedures; however, these separately delineated procedures should not be construed as necessarily order dependent in their performance. That is, some procedures may be able to be performed in an alternative ordering, simultaneously, etc.

As described above, embodiments of the present invention have various advantages. For example, according to embodiments of the present invention, it is possible to change the state as set in the BIOS when booting or setting up the system, to reduce the likelihood or prevent data from being copied through the cardbus (e.g., PCMCIA) devices without the consent of the system user. Further, embodiments according to the present invention can relate to an apparatus and a method for reducing a likelihood or preventing data copy by the cardbus devices where it is possible to change the cardbus availability and the register value by calling the BIOS routine (e.g., predetermined specific key) during the system runtime.

According to embodiments, the limitation of the cardbus device use and the release of the limitation of the cardbus device use can be performed after security procedures such as the verification of the password. Accordingly, it is possible to prevent the data from being flowed out through the cardbus devices, without the consent of the system user.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A method for preventing data copy by cardbus devices, comprising:
preparing an item for storing a setup value on whether to use a cardbus controller in a system setup menu, and controlling the setup value;
updating the setup value on whether to use the cardbus controller during system runtime using a predetermined key; and
verifying a user when changing the setup value on whether to use the cardbus controller in the update step.

2. The method according to claim 1, wherein the update step is performed by inputting a hot key, a dialog window or a pop-up window during system runtime, and wherein the controlling the setup value is by a system BIOS.

3. The method according to claim 1 or 2, wherein the verification step is performed when the setup value on whether to use the cardbus controller is converted from a disable state to an enable state or from the enable state to the disable state.

4. A method for controlling data copy by cardbus devices in a computer system, comprising:
receiving a predetermined input to select a cardbus device authorization operation during system operations;
setting a selected item value corresponding to a selected enabled or disabled status of a cardbus controller device; and
updating the status of the cardbus controller device according to the item value.

5. The method of claim 4, wherein the predetermined input is a hot key, a dialog window or a user pop-up menu.

6. The method of claim 4 or 5, wherein the cardbus device authorization operation is one of a hardware operation or a software operation of the computer system.

7. The method of claim 4 or 5, wherein the cardbus device authorization operation sets a register value for changing the cardbus controller device status.

8. The method of claim 4 or 5, wherein the cardbus device authorization operation is a user pop-up window

9. The method of claim 8, wherein the predetermined input is a user pop-up menu, and wherein the setting the selected item value is a toggle operation of the cardbus controller device status.

10. The method of any of claims 4 to 9, wherein the updating the status of the cardbus controller device comprises updating a system BIOS value in system memory for the cardbus device.

11. The method of any of claims 4 to 9, wherein the updating the status of the cardbus controller device comprises updating a register value for the cardbus controller.

12. The method of claim 11, wherein the register is in volatile memory of the cardbus controller, and wherein the register value corresponds to an input port value for the cardbus controller.

13. The method of any of claims 4 to 12, wherein setting the selected item value corresponding to the enabled status comprises satisfying an authorization requirement.

14. The method of claim 13, wherein the authorization requirement is a security menu or a user password.

15. The method according to any of claims 4 to 14, wherein the updating is performed during system runtime.

16. The method according to claim 15, wherein the updating is performed by inputting a predetermined specific key during system runtime.

17. A method for controlling data copy by cardbus devices, comprising:
designating an item configured to control whether to authorize use of a cardbus device; and
updating the item to selectively enable or disable use of the cardbus device during system runtime.

18. The method according to claim 17, wherein the updating is performed by inputting a hot key or pop-up menu during system runtime without re-booting.

19. An apparatus, comprising:
means for designating an item configured to control whether to authorize use of a cardbus device; and
means for updating the item to selectively enable or disable use of the cardbus device during system runtime.
